# EUROPEAN PATENT SPECIFICATION

(11) **EP 4 397 966 B1**
(45) Date of publication and mention of the grant of the patent: **13.08.2025**
(21) Application number: 23214302.4
(22) Date of filing: 05.12.2023
(51) Int. Cl.: G01N 23/046

(54) **METHOD AND SYSTEM FOR SCANNING OF TURBINE BLADES IN A SCANNING APPARATUS**
VERFAHREN UND SYSTEM ZUM ABTASTEN VON TURBINENSCHAUFELN IN EINER ABTASTVORRICHTUNG
PROCÉDÉ ET SYSTÈME DE BALAYAGE D'AUBES DE TURBINE DANS UN APPAREIL DE BALAYAGE

(30) Priority: 04.01.2023 GB 202300063
(43) Date of publication of application: 10.07.2024
(73) Proprietor: Rolls-Royce plc, London N1 9FX (GB)
(72) Inventor: Mulloth, Akhil, Derby, DE24 8BJ (GB)
(74) Representative: Rolls-Royce plc

(56) References cited:
- GB-A- 1 005 557
- US-A1- 2016 334 344
- US-A1- 2016 334 345

## Description

### TECHNICAL FIELD

The present disclosure relates to a method for scanning of objects, i.e. turbine blades, in a scanning apparatus such as a computed tomography, CT, scanning apparatus. The present disclosure relates further to a combination of a scanning apparatus for scanning of turbine blades and turbine blades in the scanning apparatus.

### BACKGROUND

The present disclosure is relevant to many scanning technologies, but a primary application is three-dimensional x-ray computed tomography, or CT, which combines multiple x-ray images to recreate a 3-dimensional, 3D, volume, so may be referred to as 3DCT scanning. An x-ray source produces polychromatic x-rays that penetrate a part and form an x-ray image on a detector. The objects are (usually) rotated through 360 degrees while being imaged multiple times. The x-ray images are combined via a process called reconstruction to produce a 3D representation of the objects. Surface determination is then performed to separate the object's volumes from the background. Subsequently, cross sections of the objects may be viewed by the user. Various alternative apparatuses for CT scanning are seen in known arrangements. In a medical scanner, for example, the object is fixed with the source and detector orbiting the object. There are other options on the market that allow the height to change to take a helical scan or do a slight shift to the height to do a pixel shift scan.

CT and other scanning may be used to inspect non-line-of-sight areas of parts, for example vanes and turbine blades, that are not accessible to alternative inspection techniques such as bore scopes. This is important to be able to deliver novel geometries, for example for cast metal turbine blades and additively manufactured components.

Arrangements for scanning turbine blades are known from US 2016/334345 A1.

The known arrangements teach that 3DCT scans of cast metal turbine blades, for example, are to be performed on one part at a time as the composition of the part may excessively attenuate the CT scanning x-ray beam. The known arrangements also teach that the object is to be positioned in the middle of the scanning frame, for instance with a vertical axis of rotation of a rotatable CT scanning platform extending through the object. The object may be inclined to create an angle between the axis of rotation and a longitudinal axis of the object. In this case, the orientation of the object may be selected to minimise the path length that the x-ray penetrates. The known arrangements teach that bigger and thicker objects generally produce lower quality scans as they create more beam scattering. Aiming to reduce beam hardening and poor penetration, the known arrangements teach to increase the voltage of the x-ray emitting apparatus and to use a physical or software-based scatter correction. Increasing the voltage produces a higher number of x-rays capable of penetrating more material. The same part scanned at a higher voltage will produce a higher quality image for numerous reasons. However, as taught in known arrangements, the voltage should be limited as too high a voltage will reduce the difference in contrast between two materials as the material will attenuate fewer x-rays. It is desirable to improve the quality and/or efficiency of CT scanning of objects.

A cylinder is the ideal shape to scan because it has the same thickness whatever the angle of rotation of the table with respect to the emitter and receiver. Components with complex cross sections and/or cross sections that change along their length such as turbine blades and vanes face particular scanning challenges. A turbine blade may include an aerofoil cross-section with a leading edge and a trailing edge face. The leading-edge cross-section is thicker than the trailing edge cross-section. The aerofoil section of the object may have a concave blade surface on one side bounded at either end by the leading and trailing edges and a convex blade surface on the other side. Optimising the CT scan parameters for all features of the object at the same time is difficult. In particular, the concave surface of the blade has the potential to concentrate or converge scattered x-rays and create a high level of noise on the concave side, leading to concave side (or concave wall) effects. A concave wall effect produces image artifacts formed on or around the image of the object due to beam hardening and haloing.

### SUMMARY

According to one aspect, there is provided a method for scanning of a plurality of objects, i.e. turbine blades, in a scanning apparatus in accordance with claim 1. The method comprises disposing the turbine blades on a support of the scanning apparatus, so that the turbine blades are positioned between an imaging beam emitting element and an imaging beam receiving element oppositely disposed to either side of the support, wherein the support is rotatable relative to the emitting and receiving elements about an axis of rotation to allow creation of an image from projections each taken at a different relative angle of rotation, the turbine blades being positioned adjacent each other on the support in a configuration that reduces the variation in material thickness penetrated at the multiple relative angles of rotation; operating the scanning apparatus at the multiple relative angles of rotation to produce an image of the objects; the configuration comprising an alternate head to toe arrangement with the leading edge of one blade positioned adjacent to the trailing edge of the adjacent blade.

The objects are positioned adjacent each other on the support in a configuration that reduces the variation in material thickness penetrated at the multiple relative angles of rotation. There can be quite a considerable variation in thickness for a single part, especially for an uneven or elongate cross section, and this can make it difficult to set parameters for scanning which work over the different thicknesses facing the scanner at different angles of rotation. Although the known arrangements generally teach against putting a plurality of components on the table, positioning parts together in preferred respective orientations can alleviate this issue. The method further comprises operating the scanning apparatus at the multiple relative angles of rotation to produce an image of the objects. There may be two objects in the configuration, for example two identical objects. To even out the material path length further, three, four or more objects may be provided in the configuration.

In one scenario, the scanning apparatus is a two-dimensional or three-dimensional computational tomography, CT, scanning apparatus with a table or platform which is rotatable about a vertical axis, and with oppositely disposed x-ray emitter and receiver units to either side of the table. Alternatively, the emitter and receiver units may rotate about the axis, and the support may remain stationary. The objects (or parts or components) may be directly supported on the platform or held within a jig (or on a support in the form of a jig). The objects may extend at an angle to the vertical to facilitate cross-sections at preferred angles through the objects.

The objects may be positioned offset from the axis of rotation, for example so that no part of the objects or no part to be scanned of one or more of the objects or configuration of objects intersects the axis of rotation. By keeping the objects or parts of the objects to be scanned, that is the parts of interest from the scan, off centre and increasing the number of parts to average out the material path length in all directions the method deviates from the usual known practices. Of course, there may be arrangements where an object from the objects is offset so that no part of it intersects the axis while another object from the objects may be positioned so that only the part of it to be scanned is offset, for example. Further arrangements may have one object intercepting the axis of rotation while another is totally offset.

The objects may be elongate and a shape of the configuration formed by the combined shape of the objects in the configuration may have a lower aspect ratio than a single one of the objects. This can give a shape of the configuration which is more similar to the "ideal" cylindrical shape for scanning in which thickness of material to be penetrated is constant for all the projections. The aspect ratio of the configuration may be less than two thirds, or even less than half, of the aspect ratio of a single one of the objects. The aspect ratio of the combined shape may be computed using the aspect ratio of a rectangular bounding box around the two (or more) cross sections.

The objects may be directly adjacent, for example in the sense that the shortest straightline distance between the cross sections is shorter than the largest material thickness of any of the objects measured in any direction in the cross section.

According to the invention, the scannable objects are turbine blades.

For example, the objects may be made of metal or composite or polymer or a mixture of materials. The objects can be cast or moulded or machined or 3D printed (additively manufactured), for example. The objects may be a simple shape, such as an elongate bar, or a more complex object such as a component for use in a machine. Hence the objects may be a blade or vane or other complex manufactured part.

According to the invention, the blades are positioned in an alternate headto-toe arrangement with the leading edge of one blade positioned adjacent to the trailing edge of the adjacent blade. The chords of all (or both) the blades (for example, all two, three, four or more blades) in the arrangement may be aligned. If the blade has convex and concave blade surfaces, the concave surface of one turbine blade may face the concave surface of the other turbine blade. Alternatively, the convex surface of one turbine blade may face the convex surface of an adjacent turbine blade.

Additionally, or alternatively, the blades may be disposed with a configuration centred on the axis of rotation with their convex surfaces facing each other and such that their convex surfaces are closer to the axis of rotation than their concave surfaces. Indeed, this arrangement is not limited to turbine blades, any object may have a concave surface opposite a convex surface and be correspondingly positioned. This orientation too, can provide better image quality, for example because the concave surfaces are facing away from the axis, which has been seen to reduce the concave wall effect. Further, by positioning the blade with the concave side facing away from the axis, poor image contrast may be improved as the concave side may be in a brighter region of the scan. However, in some scenarios, due to complicated internals, or the leading edge having overly curved and thick geometries, the concave side may be pointed towards the axis of rotation and still be in the bright region to produce a good quality scan.

With a configuration of more than two blades, the blades may all face the same way (so that all the convex surfaces face in the same direction) or alternate. Of course, the turbine blade is not limited to a convex surface and concave surface. For example, the turbine blade may have a substantially flat blade surface opposite a concave or convex surface or two concave or convex surfaces opposite one another or any other combination of surfaces from known arrangements.

The plurality of objects may be disposed on the support so that a notional line drawn from the emitting element to the receiving element through the axis of rotation intersects two or more of the plurality of objects for at least a third or over half of the projections. That is, the projections, which are taken at equally spaced angular positions around the axis of rotation, may cover 360 degrees of rotation, and the projections over at least 120 degrees (or 180 degrees) may then intersect one or more objects. With this density of object positioning comes an increase in efficiency and, contrary to the established view, the inventor has found that any decline in quality is not significant. In fact, the inventor has come to the surprising realisation that the scan quality may be improved as a larger amount of material allows for more power to be used for the scan without oversaturating the detector. Also, scanning parameters such as the power to voxel ratio, sometimes referred to as the power to voxel ratio, are easier to adjust to desirable values when the thickness to be scanned of the objects varies less. So, positioning of the objects in which the rays pass through at least one object for more of the projections reduces a variation in thickness to be scanned and can make parameter setting easier. Optimising the software scanning parameters may further improve the scanning efficiency.

The plurality of objects may be positioned in any suitable arrangement. For example, they may be disposed in a plurality of their configurations to form a pattern on vertices of a notional regular geometric figure centred on the axis of rotation. Taking the turbine blade arrangement, the configurations of the plurality of blades may be positioned on the three vertices (corners) of a triangle, the four vertices of a square, or the five vertices of a pentagon, or the six vertices of a hexagon etc..: any notional figure can be used. In this arrangement, each configuration may be formed, for example, by disposing the objects directly adjacent to each other and/or centred on the vertex. For example, four objects may be positioned at each vertex of a square (seen in plan view with a vertical axis of rotation). A further plurality of objects or configurations of objects may be positioned in a pattern on the vertices of a further notional regular geometric figure centred on the axis of rotation and inside the notional regular geometric figure. An object or objects or configuration of the further plurality of objects may have substantially similar geometries to the plurality of objects or may be different from the plurality of objects and/or each other. Additionally or alternatively to the further plurality of objects or configuration of objects, an attenuating object or objects such as a solid cylinder may be disposed in the inner region, for example centred on the axis.

The configurations (in the pattern) may be oriented to provide rotational symmetry of the pattern of configurations about the axis of rotation. Optionally, the objects in the configurations may be substantially similar or identical in construction and disposed on the support so that the order of rotational symmetry is equal to the number of vertices of the notional regular geometric figure. Of course, the objects may be constructed of different materials but have substantially similar forms and therefore still exhibit rotational symmetry. Alternatively, the objects may have different shapes and still possess a rotational symmetry about the axis of rotation in terms of positioning.

The configurations of the objects may be positioned on some but not all of the vertices of the notional regular geometric figure (for example two of the four vertices of a square). In this case, for example, all of the objects are positioned to one side of a plane along which the axis of rotation extends (as seen in plan view for a vertical axis and horizontal support all the parts are to one side of a straight line drawn through the axis of rotation). Surprisingly, the inventor has found that such an asymmetrical arrangement, with half of the available space left empty, provides a better quality image.

In another arrangement, a configuration of objects may be contained within a jacket. The volume surrounding the objects within the jacket may be occupied by a filling material or may be a solid, that is a solid jacket volume. The jacket may completely surround the object or may surround the part to be scanned of the object. The jacket may be positioned offset to the axis of rotation. In examples, no part of the objects or no part of the objects to be scanned or the configuration of objects intersects the axis of rotation. As before, the objects contained within the jacket may be turbine blade. Of course, all the aforementioned arrangements apply to the objects when they are contained within the jacket. That is, for example, a plurality of jacket configurations may be disposed on the vertices of a notional regular geometric figure or offset from the axis of rotation.

The arrangement may further comprise filling the volume surrounding the object within the jacket with the filling material. The filling material may be poured or added into the jacket after the object has been placed into the jacket. The jacket may completely surround the object.

Surprisingly, the inventor has found that use of a surrounding jacket (which is thus in a fixed stationary relationship with the object) and with a solid jacket volume or filling material within the jacket can significantly improve the scan quality for many objects, especially those with complex cross sections and/or cross sections that change along their length.

The filling material or solid jacket volume may have an imaging beam attenuation close to the imaging beam attenuation of the material of the objects (such as within 20% or 10% of the imaging beam attenuation of the material of the object). The filling material or solid jacket volume may have substantially the same imaging beam attenuation as the imaging beam attenuation of the material of the objects. If the objects are made from different materials the filling material may be chosen to match the material of one of the objects or have an imaging beam attenuation similar or identical to one of the objects. Additionally, and/or alternatively, the filling material or solid jacket volume may have an imaging beam attenuation within the range of imaging beam attenuations of the objects. The constant attenuation coefficient throughout the filling material or solid jacket volume may improve the image quality for each projection taken at varying angles. Averaging out the material thickness by, for example filling in any concave surfaces, may reduce artifacts caused by x-rays scattering off the object's surfaces and the concave wall effect, even with a filling material or solid jacket volume having a different level of attenuation from the object..

The filling material may be in the form of powder, grains or fluid. The filling material may, for example, be either metal powder or polymer powder and thus may be poured into the jacket. This allows the filling material to completely surround the objects, filling any voids or gaps between the objects and the jacket. This may provide an approximately constant material thickness for each projection, thereby improving image quality of the scan.

The objects may be formed of a metal: pure, alloy or composite, for example. The powder may be in the form of metal powder of the same material as the objects or the solid jacket volume may be a metal of the same material as the object. As before, matching the (mass) attenuation coefficient of the powder with the objects, by using the same material as the objects, may improve image quality. In the case where the objects are cast turbine blades or other objects with a concave surface, the metal powder or solid metal volume may fill the concavity, thereby reducing image artifacts caused by scattering and beam hardening, for example.

There may be a border region surrounding or partially surrounding the objects in the jacket with an imaging beam attenuation different from the imaging beam attenuation of the objects. For example, the border region has a lower imaging beam attenuation than the imaging beam attenuation of the objects. The region may be formed of a material with a lower density than the objects, for example the region may be an air gap.

The objects may be wrapped or coated in one or more films, sleeves or walls, for example a polymer film such as cling film or a polymer membrane or a polymer bag or a polymer wall (which may be 3D printed), to provide a boundary between the objects and the filling material or the solid jacket volume. The one or more films, sleeves or walls may form the border region. The objects may be wrapped in the film, inserted into the sleeve(s) or placed between moulded walls before placing it in the jacket. This may prevent the objects contacting the filling material or solid volume and may therefore prevent contamination of the objects. Any suitable material may be used to cover the objects before they are placed in the jacket. Of course, the objects may be individually wrapped or covered or inserted into sleeves or may be combined. The film, wall or sleeve may have a low imaging beam attenuation and may therefore aid identification of the objects in the jacket by providing a contrast in the scan image at the object's surface and act as or delimit the border region mentioned above.

The jacket may have a circular cross-section or substantially circular cross-section. It may comprise one or more walls together forming a spherical or part spherical surface or may have a cylindrical side wall extending from a base. The jacket may completely surround the object. If the jacket is hollow (to receive a filling material) and has a spherical or part spherical surface, it may be constructed in pieces to allow a cap (forming part of the spherical or part spherical surface) to be added to a main part (also forming

The apparatus for scanning the objects may be a two-dimensional or three-dimensional computational tomography, CT, scanning apparatus, such as a three-dimensional, 3DCT, scanning apparatus. The imaging beam emitting element may emit an energy beam within the x-ray region of the electromagnetic spectrum. The emitted x-rays may form a polychromatic x-ray spectrum. The x-rays may be formed by a tungsten metal element within the imaging element. Of course, the emitting element may emit other energy forms such as gamma rays or ultrasound or any other energy beam suitable for part of the spherical or part spherical surface) once the jacket has been filled. If there is a base and cylindrical side wall, the base and side wall may be formed of a polymer film or wall and may contain the filling material. The jacket may have a solid volume or may contain the filling material, and in either case may surround the objects so that the thickness of material to be penetrated is approximately constant for all projections. Thus, the image quality and contrast of the scan may be improved. The polymer film or wall may have a relatively low imaging beam attenuation as compared to, for instance, the metal powder. Hence, the polymer may have a minimal effect on the image quality of the scan.

In a further aspect, there is provided, in accordance with claim 18, a combination of a scanning apparatus for scanning of a plurality of turbine blades and a plurality of turbine blades in the scanning apparatus (both as previously described). The scanning apparatus comprises: a support for the turbine blades; and an imaging beam emitting element and an imaging beam receiving element oppositely disposed to either side of the support, wherein the support is rotatable relative to the emitting and receiving elements about an axis of rotation to allow creation of an image of the turbine blades from projections each taken at a different relative angle of rotation; wherein the turbine blades are positioned on the support in a configuration that reduces the variation in material thickness penetrated at the multiple relative angles of rotation; so that when the scanning apparatus is operated at the multiple relative angles of rotation it produces an image of the plurality of turbine blades; wherein the configuration comprises an alternate head to toe arrangement with the leading edge of one blade positioned adjacent to the trailing edge of the adjacent blade. scanning. The imaging beam emitting element and the imaging beam receiving element may be oppositely disposed to either side of the support.

The support may be a table which rotates about a vertical axis and the objects may be disposed on the support. Alternatively, the support may be fixed and the imaging beam emitting element and the imaging beam receiving element may rotate around a vertical axis centred on the support.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF THE DRAWINGS

Examples will now be described with reference to the accompanying drawings, which are purely schematic and not to scale, and in which:
**Figure 1** is a schematic illustration showing an exemplary 3-dimensional CT scanning arrangement;
**Figure 2** is a flow chart showing steps of a method for scanning of a plurality of objects in a scanning apparatus;
**Figure 3** is a diagonal view of an aerofoil section of a turbine blade;
**Figure 4** is a sectional plan view of two turbine blades disposed relative to each other on a support in a CT scanning apparatus;
**Figure 5** is another sectional plan view of two turbine blades disposed relative to each other on a support in a CT scanning apparatus;
**Figure 6** is a sectional view of three (generic) objects disposed relative to each other on a support in a CT scanning apparatus;
**Figure 7** is a sectional plan view of four turbine blades disposed relative to each other on a support in a CT scanning apparatus;
**Figure 8** shows a combination of a set/configuration of two turbine blades, as depicted in Figure 4, disposed relative to an axis of rotation of a support in a CT scanning apparatus;
**Figure 9** shows another combination of a set/configuration of two turbine blades, as depicted in Figure 4, disposed relative to an axis of rotation of a support in a CT scanning apparatus;
**Figure 10** shows another combination of a set/configuration of two turbine blades, as depicted in Figure 4, disposed relative to an axis of rotation of a support in a CT scanning apparatus;
**Figure 11** is a sectional view of two turbine blades disposed within a jacket.

### DETAILED DESCRIPTION

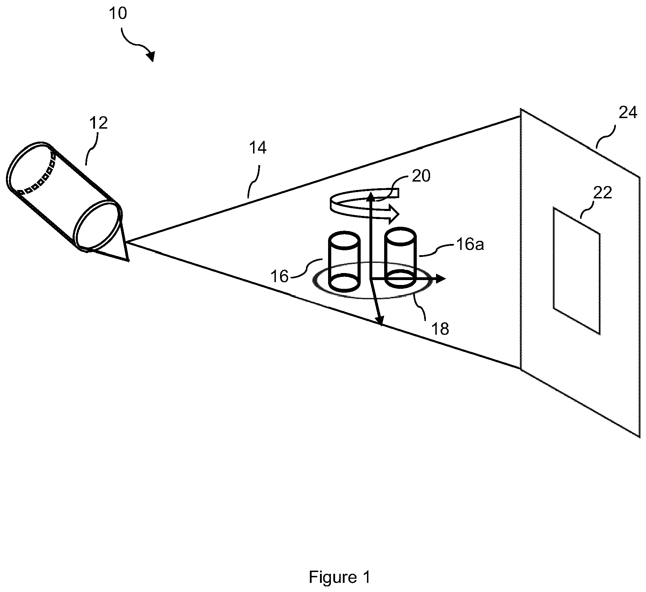

**Figure 1** illustrates the basic principles of an exemplary 3DCT scanning technique of a type which may be used in the method discussed herein. A 3D computer tomography (CT) scanning apparatus 10 may be used to perform a volumetric scan. The 3DCT scanning apparatus 10 comprises an imaging beam, i.e. x-ray emitting element 12, a support 18 and an imaging beam, i.e. x-ray detecting element 24. The volumetric scan may be any scan which is capable of generating a 3-dimensional (3D) image of a plurality of objects 16-16a positioned on the support 18 and contained within an x-ray beam cone 14. The x-ray emitting element 12 generates the x-ray beam cone 14 which may comprise polychromatic x-rays (not shown). The support (usually a table on which the objects or a jig is positioned) may be configured to rotate about a (usually vertical) axis of rotation 20 so that the objects positioned directly or indirectly on the support rotates about the axis of rotation. Each object is shown here as a simple cylinder. The polychromatic x-rays penetrate the objects and are received by the x-ray detecting element. A volumetric x-ray image 22 of the objects is formed from the output of the x-ray detecting element. For example, the output may be processed in a manner known per se to form one or more two-dimensional images in the form of "slices" (cross-sections) through the objects.

As will be appreciated, in order to capture complete slices through the relevant part of the objects via the type of technique described above, the part of the objects being scanned should remain entirely within the x-ray beam cone whilst it is rotated.

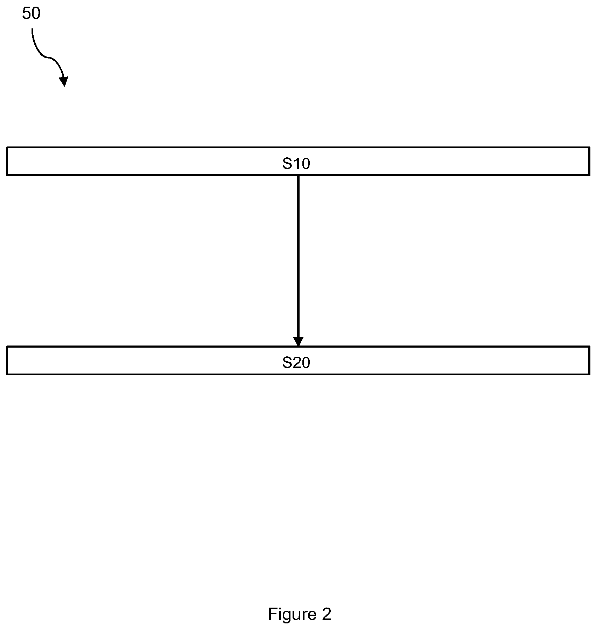

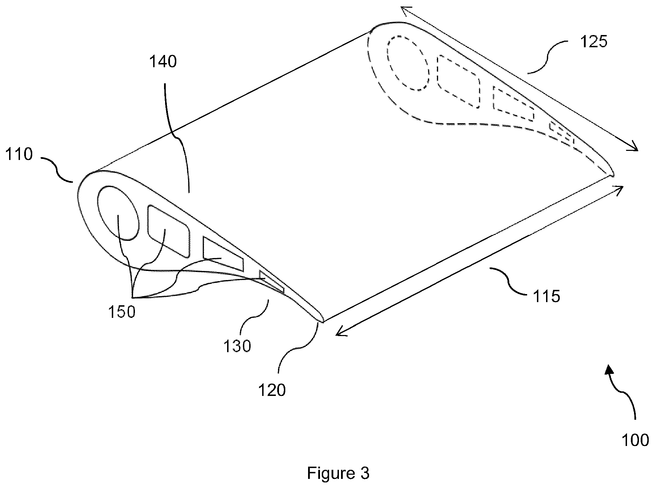

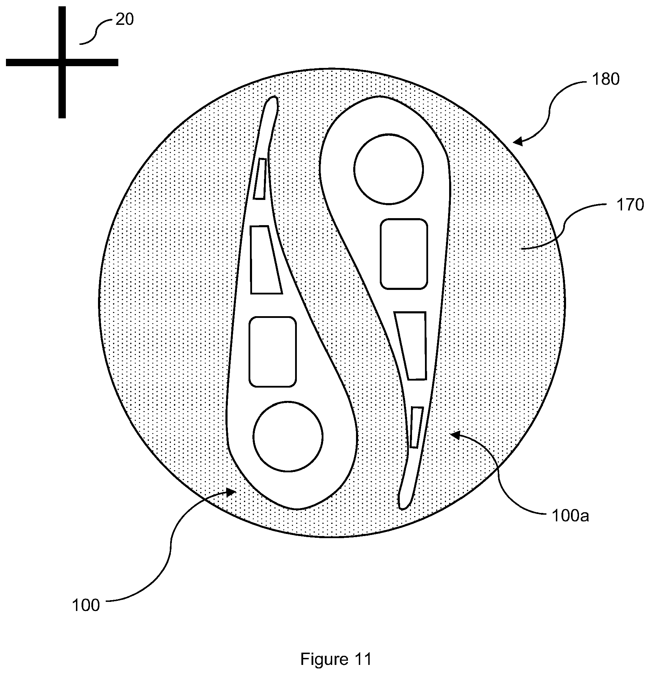

**Figure 2** is a flow chart showing steps of a method 50 for scanning of a plurality of objects in a scanning apparatus. In step S10 the objects are disposed manually, for example, on a support in the scanning apparatus in a configuration that reduces the variation in material thickness between the emitter and receiver penetrated at the multiple relative angles of rotation. The objects may be held in a jig and so indirectly positioned on the support. The scanning apparatus may be, for example, substantially similar in construction to the 3DCT scanning apparatus 10. In accordance with the claims, the objects may be turbine blades 100, for example those which are depicted in Figure 3. It will be appreciated that outside the scope of the claims, the objects could, however, take any form. Additionally, the objects may be disposed in a jacket 180, see Figure 11, or plurality of jackets, before scanning. The objects and/or jackets may be disposed in a pattern around the axis of rotation with no part of them intersecting the axis or with no part to be scanned of them, that is the part of interest from the scan, intersecting the axis. This may improve scan quality.

In S20 the scanning apparatus is operated at multiple relative angles of rotation to produce an image of the objects. A projection or projections may be taken at each angle around a complete 360 degrees and a complete volumetric representation of the objects may be obtained from a set of equally angularly spaced projections. The volumetric representation may comprise a plurality of voxels, with each voxel representing a subvolume of the image. Subsequently the image can be viewed in cross sections, as in known arrangements.

**Figure 3** shows a diagonal view of an aerofoil section of a turbine blade 100. Other parts of the blade, such as a mounting section are less relevant and not shown. The turbine blade in this arrangement is formed from a metal material which may be cast metal, but the teaching herein can be applied to objects of any scannable material.

The turbine blade comprises a leading edge 110, a trailing edge 120, and blade surfaces between these edges, such as a concave surface 130 and a convex surface 140. The concave surface extends in an inwardly curved shape between the leading edge and the trailing edge. The convex surface of the turbine blade extends in a similar manner to the concave surface, but with an outward curve and is opposite to the concave surface. There may be void regions 150 (without the material). For clarity only, exemplary voids are illustrated in Figure 3. There are four voids illustrated, although it will be apparent to the skilled reader that more or fewer voids may be present.

Sometimes only a small region of a large object is scanned. For example, the aerofoil section (rather than any mounting section) is generally of primary interest when CT scanning turbine blades, and in particular the internal structure of the aerofoil section is to be investigated. The aerofoil section may, for example, be considered as the part of interest of the object. The turbine blade may be disposed on the support so that its mounting section is intersecting the axis of rotation, but the aerofoil section does not. That is, the part of the object to be scanned does not intercept the axis of rotation. As a further example, an object in the shape of the letter 'L' may be disposed on the support. It may be that only the vertical part being scanned is offset from the axis but the bottom horizontal part may still intercept the axis of rotation.

As will be appreciated by those of skill in the art, the turbine blade comprises an elongate aerofoil section (part) of the turbine blade having a span 115. Further, a chord 125 maybe be drawn between the extremities of the leading edge and the trailing edge.

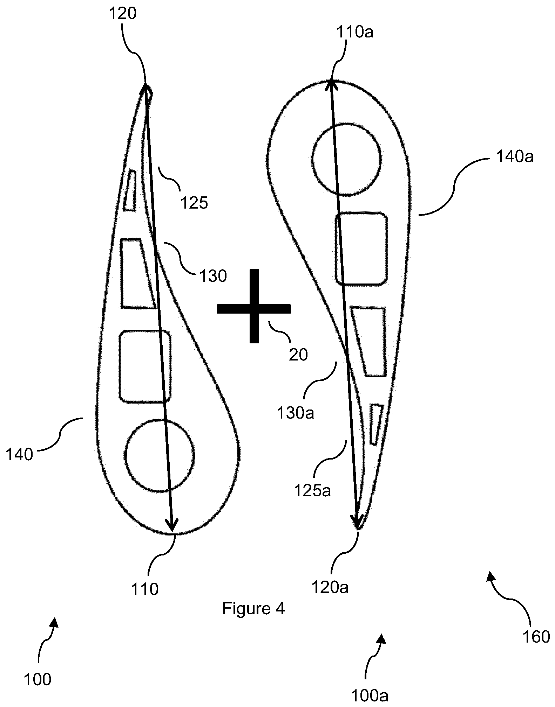

**Figure 4****,** a first arrangement, shows a sectional view of the turbine blade positioned adjacent to another turbine blade 100a which has a substantially similar (or identical) construction to the first turbine blade. The axis of rotation extends into the plane of the page and is shown as a cross. The turbine blades are disposed within the scanning apparatus in a favourable orientation relative to one another (with an air gap between them). The leading edge of the first blade is adjacent a trailing edge 120a of the second blade and the trailing edge of the first blade is adjacent a leading edge 110a of the second blade, so that they are in a "yin-yang" or "head to toe" configuration, with the combined thickness of material to be penetrated by a scanner when the blade surfaces face the x-ray emitting element being evened out in a direction between the leading and trailing edges. In this arrangement the concave surface of the first blade faces the concave surface 130a of the second blade.

Additionally, and/or alternatively, the orientation of the first blade relative to the second blade may be understood by drawing the chords 125-125a between the extremities of the leading edge and the trailing edge. The orientation of the first blade relative to the second blade is such that the chord 125 of the first blade is substantially parallel to the chord 125a and spaced from it in a direction at right angles to the chords.

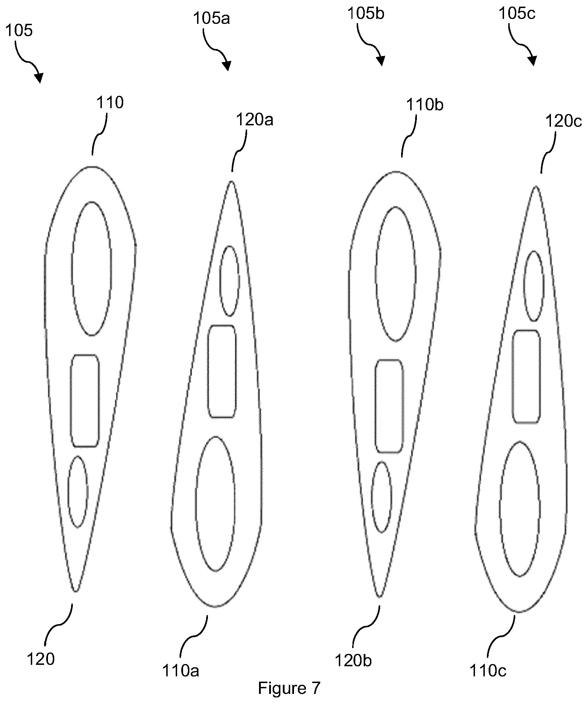

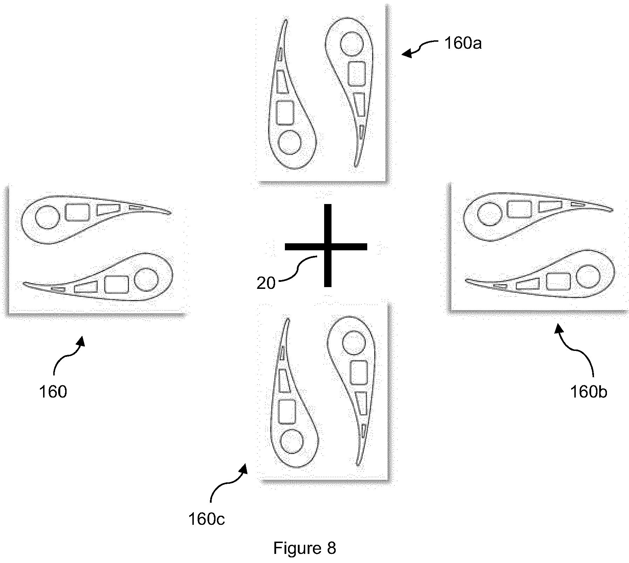

Disposing a first object relative to a second object in this manner may be considered as making up a (base) configuration 160. A plurality of base configurations may be oriented relative to one another and the axis of rotation, see for example Figures 7 and 8.

A longitudinal axis of a turbine blade can be defined, using the turbine blade in Figure 3, as being parallel to the span of the turbine blade and extending along the span of the aerofoil section. In Figure 4 the longitudinal axis is substantially parallel to the axis of rotation (extending into the plane of the page). The objects may, however, be orientated to form an angle between the longitudinal axis of the objects and the axis of rotation. Disposing the objects so that the longitudinal axis of one, or both, of the objects is at an angle to the axis of rotation may improve image quality and contrast of the 3DCT scan. As will be understood, the turbine blade is used by way of example only; the object is not limited to taking this form. A longitudinal axis can be defined in a similar manner for a different object.

As will be appreciated, when the first object and the second object are positioned in this base configuration on the support, the support rotates about the axis of rotation and the two objects will rotate together, in their relative orientation as a whole around the axis of rotation within the x-ray beam cone, in the manner described above with reference to Figure 1. The axis may, for example, extend centrally between the objects, so that they are equally offset from it, or it may extend in any other position. A complete volumetric representation of the two objects may be obtained by acquiring a set of CT slices. That is, the first object and the second object are CT scanned simultaneously to produce sectional slices of both objects at the same time. 3DCT scanning efficiency of objects may be improved as a plurality of objects may be scanned simultaneously. For example, such scans may be efficient but still of sufficient quality to issues like miss-formed features in the internal passage.

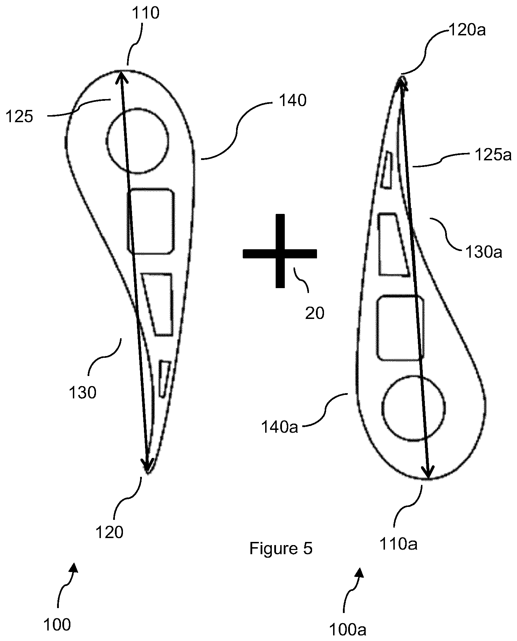

**Figure 5** shows a second arrangement for positioning the first turbine blade and the second turbine blade relative to each other. The leading edge of the first blade is adjacent the trailing edge of the second blade and the trailing edge of the first blade is adjacent the leading edge of the second blade, so that the combined thickness is evened out, as mentioned above, the positioning with respect to the axis is the same as in Figure 4 and the chords are parallel as before.

However, in this case, the convex surface of the first blade faces a convex surface of the second blade. Disposing the blades with their convex surfaces proximal to the axis of rotation and the concave surfaces distal to the axis of rotation, that is the convex surfaces face the axis of rotation, may counteract the concave wall effect as the concave surface is in a "brighter area" of the x-ray scan, away from a central "dark spot" on the axis.

The turbine blades may be disposed with the axis of rotation in between their leading edges and trailing edges (or within the extent of the objects, in more general terms) when viewed from one side of the CT table, so approximately the centre of the convex walls is facing the axis.

A problem the inventor identified when scanning individual turbine blades with an aerofoil cross-section was poor contrast and image quality in either the thinner trailing edge or the thicker leading edge, because different scanning parameters are suitable for the different thicknesses in these two different blade areas. Also, the concave surface and convex blade surfaces can lead to scanning issues. Thus, optimising the 3DCT scan parameters for turbine blade's aerofoil forms (and indeed other objects with uneven thickness across their length) is a problem in the known arrangements and may lead to scan artifacts such as beam hardening and the concave wall effect.

The inventor has come to the realisation that by evening out the material thickness between the two objects and positioning them offset from the axis, the image quality and contrast of the 3DCT scan may be improved as, for example, artifacts from the 3DCT may be reduced or eliminated. Further, the 3DCT scanning efficiency of objects may be improved as a plurality of objects may be scanned simultaneously.

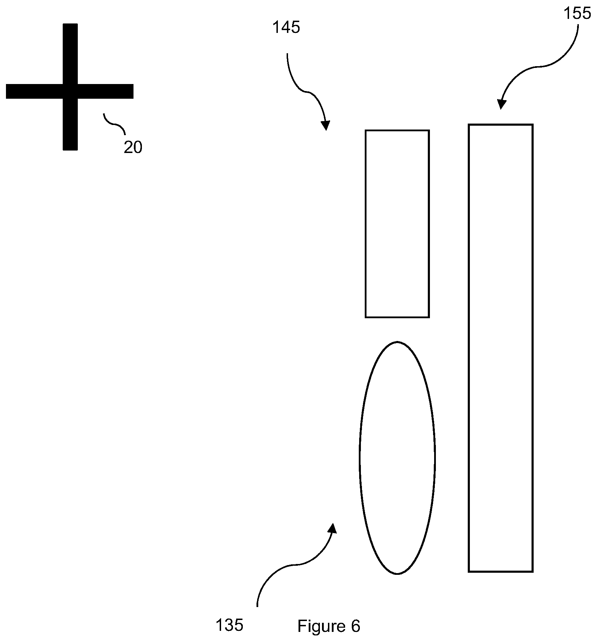

**Figure 6** shows a third arrangement in which a plurality of different objects is disposed in a favourable orientation relative to each other. For example, a first object 135 may have an oval cross section with a high aspect ratio (say of more than 2:1), and a second object 145 and a third object 155 may have an elongate rectangular, high aspect ratio, cross sections. However, not all the objects need have a high aspect ratio The combined objects are disposed in a configuration which has a lower aspect ratio than a single one of the objects. For this comparison, any of the objects may be chosen.

The configuration of the plurality of objects may provide a combined shape similar to or at least closer to the "ideal" cylindrical shape for scanning in which thickness of material to be penetrated is constant for all the projections. The image quality and contrast of the scan may therefore be improved. Further, the 3DCT scanning parameters may be optimised, hence improving scanning efficiency.

**Figure 7****,** a fourth arrangement, shows a sectional plan view of a configuration of four turbine blades 105-105c with similar constructions to the turbine blade 100. That is, the turbine blades have leading and trailing edges and opposite blade surfaces extending between them. These surfaces may have substantially flat parts, as depicted. The four blades may, however, have substantially similar (or identical) constructions to the blade previously described. In the Figure 7 configuration, the four blades are in alternating head to toe positioning. Convex and concave blade surfaces may be positioned as per the base configurations of the first arrangement in Figure 4, the second arrangement in Figure 5 or the third arrangement of Figure 6. For example, the configuration in Figure 7 may be realised by disposing two base configurations of two turbine blades aligned and adjacent each other each according to the first arrangement. Alternatively, all the convex surfaces may face the same way, or alternate convex surfaces may face the same way.

Further, it is understood that this arrangement of a line of blades is not limited to four objects and more or fewer may be used.

As will be appreciated, when the four blades are disposed on the support, the support rotates about the axis of rotation such that the four blades will rotate together, in their relative orientation, around the axis of rotation within the x-ray beam cone, in the manner described above with reference to Figure 1. The four blades may be disposed such that the combined thickness of material to be penetrated by the scanner when the blade surfaces face the x-ray emitting element is evened out in a direction between the leading and trailing edges. The aspect ratio of the four blades together (or more generally of a line of two or more blades taken together) is lower than the aspect ratio of a single turbine blade. Indeed, this configuration may reduce the combined aspect ratio of a plurality of any objects with relatively high aspect ratios.

A complete volumetric representation of the four blades may be obtained by acquiring a set of CT slices. That is, the four blades are CT scanned simultaneously to produce sectional slices of all four blades at the same time. 3DCT scanning efficiency of objects may be improved as a plurality of objects may be scanned simultaneously.

**Figure 8** shows a sectional view of 8 turbine blades and the axis of rotation. This arrangement may be realised by considering a notional regular geometric shape (extending parallel to the plane of the support, not shown) such as a rectangle or square or triangle for example, with a centre of symmetry aligned with the axis of rotation and by disposing a plurality, in this case four, of base configurations 160-160c on the vertices of the geometric figure.

In a scan of objects or parts of objects offset from the axis of rotation, the inner sides of the objects or parts of the objects will be darker than the outer sides. Introducing more material for the x-rays to penetrate may improve the scan quality as the power of the scanner may be adjusted to levels where previously image contrast would be reduced. The adjusted power may result in a relatively even contrast across the objects. Of course, other scanning parameters may be adjusted and optimised to improve the quality and efficiency of scanning the plurality of objects.

As will be appreciated, the base configuration is not limited to that given in the first arrangement. For example, a base configuration may be provided as, but is not limited to, the configuration shown and described in the second, third or fourth arrangements. Further, it is understood that this arrangement is not limited to four sets of the base configuration. More or fewer sets of the base configuration may be used. It is also understood that the number of vertices of the geometric shape is not limited to four, more of fewer vertices may be used.

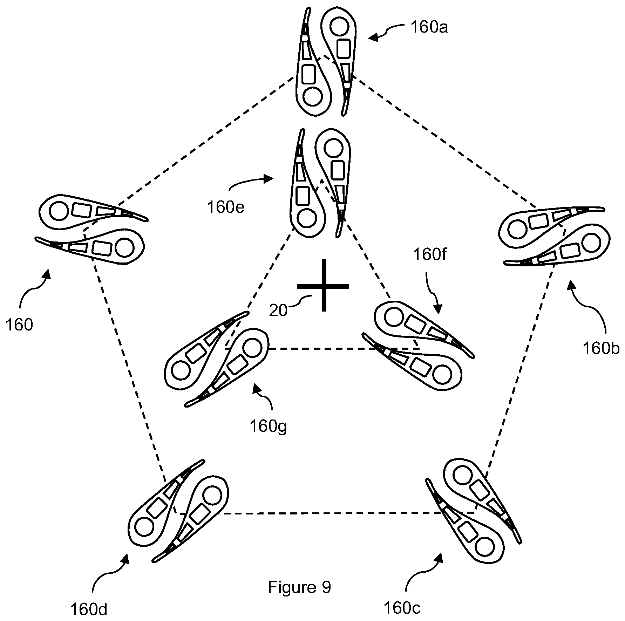

**Figure 9** shows a plurality of turbine blades in configurations 160-160g disposed relative to the axis of rotation. Considering the notional regular geometric figure, the configurations may be disposed on the vertices of a pentagon (shown with a dashed line in the figure) and on the vertices of a further notional regular geometric figure, in this example a triangle (shown with a dashed line in the figure), inside the notional regular geometric figure. Of course, geometric figures with a different number of vertices may be used.

In a scan using turbine blades in configurations, for example with longitudinal (vertical) axes parallel to the axis of rotation but offset from the axis of rotation, the inner side of the configurations (closer to axis of rotation) will be darker than the outer side. Introducing more material inside the notional geometric figure by, for example, arranging further configurations in a pattern around an inner notional figure, may improve the scan quality of the configurations in the outer region. The extra material in the inner region of the support allows for the power of the scanner to be adjusted so that the configurations on the outer geometric figure have a relatively even contrast across their cross-sections.

As will be appreciated, this arrangement may apply to any objects in a configuration, and objects of different size and shape may be used in the same scan. Additionally or alternatively, an attenuating object or objects not shown here (for example a solid cylinder) may be disposed in the inner region, such as centred on the axis.

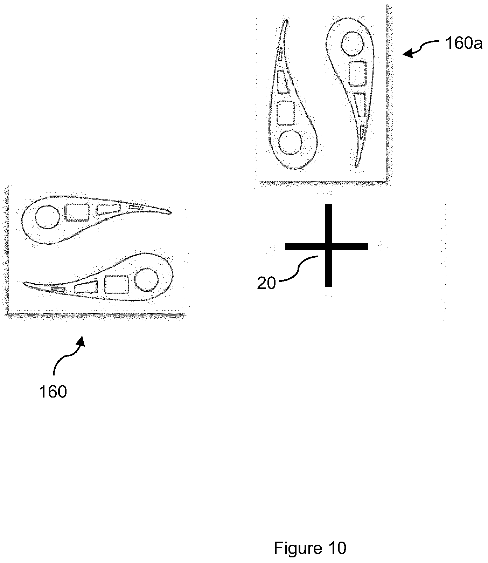

**Figure 10** shows the base configuration, as in Figure 8, disposed on some, but not all of, the vertices of the notional regular geometric figure. The configurations may be, for example, positioned on two adjacent vertices of the geometric figure. Considering a notional regular geometric shape (not shown) such as a rectangle or square or triangle for example, with a centre of symmetry aligned with the axis of rotation, the first object and second object may be positioned on two adjacent vertices of the geometric shape.

Positioning first and second configurations on the vertices of the geometric figure may improve the image quality and contrast of the first configuration of objects and/or the second configuration of objects. The skilled reader will understand that the orientation of the first configuration relative to the second configuration may be varied to improve the image quality and contrast of the first configuration and/or the second configuration.

The inventor was surprised to find that if, for example, the configuration of blades is disposed to take up only half of the available vertex positions, and therefore leave half the field clear, the scan quality is improved.

**Figure 11** is a sectional view of two turbine blades in a configuration as described above disposed within a jacket 180. The jacket, which in Figure 11 has a circular cross-section, but may take any suitable form, contains a filling material 170 (or in another arrangement may contain a solid jacket volume). For example, the filing material is a powder made from the same material as the objects disposed within the jacket or the jacket has a solid jacket material such that the volume surrounding the object is solid. Indeed, the solid jacket volume may be made from the same material as object. In an arrangement where the objects are turbine blades made from a cast metal, the powder or solid jacket volume may, for example, be made from the same material as the cast metal. The material of the powder or solid jacket volume may be matched with the material of the objects so that the powder and objects have the same imaging beam attenuation. That is, as the powder or solid jacket volume and objects are made from the same material, they have the same attenuation coefficient. Hence, it will be appreciated that any material may be used for the powder or solid jacket volume in this example so long as it has a similar, or substantially similar, imaging beam attenuation as the objects disposed within the jacket.

It will be understood that the objects disposed within the jacket may be made of different materials. The imaging beam attenuation of the filling material or solid jacket volume may be matched to one of the objects, that is the filling material or solid jacket volume may be the same as the material of one of the objects, for example. Alternatively, the composition of the filling material or solid jacket volume may be chosen so that its imaging beam attenuation is an average of the imaging beam attenuations of the objects. The imaging beam attenuation, and the (mass) attenuation coefficient, of the filling material or solid jacket volume may lie within the range of the imaging beam attenuations of the objects.

The jacket, in this example, may be made from a polymer material. However, it is understood that any material, for example with a relatively low x-ray attenuation coefficient, compared to, for example, a cast metal turbine blade, may be suitable so as to not interfere with the scan quality.

The blades (or objects) are disposed within the jacket with the filling material (or in another arrangement with the solid jacket volume) and may be covered by a polymer film (not shown) to prevent contact between the blades (or objects) and the filling material (or solid jacket volume). Additionally or alternatively, the objects may be wrapped or placed within a 'sleeve-like' wall or cooperating walls (preferably contiguous with the object surfaces) to separate it from the filling material or solid volume. It will be understood that a plurality of blades and/or, indeed, any plurality of objects may be disposed within the jacket. The film may prevent contamination of the objects from the filling material or solid volume. Further, the film may provide a region between the filling material, or solid volume, and objects with an imaging beam attenuation different from the object's imaging beam attenuation. For example, the polymer film may have a lower imaging beam attenuation (or lower density) than the objects. Thus, there will be a contrast at the border region-object boundary of the scan. This may aid in the identification of the objects in the image scan.

As will be appreciated, if the jacket, with a plurality of objects disposed within it, is positioned on a support of a scanning apparatus, the support may rotate about the axis of rotation such that the jacket and its contents move, around the axis of rotation, within the x-ray beam cone, in the manner described above with reference to Figure 1. The objects may be disposed within the jacket or the jacket may only surround the parts of the objects to be scanned. It will be understood that that either the jackets may be disposed on the support or it may be that the part of the objects not to be scanned are disposed on the support so that the jackets are in the scanning region, for example.

Averaging out the material thickness of a plurality of objects, by disposing them in a jacket with a filling material or solid jacket volume, may reduce artifacts caused by the concave wall effect. Regions of the objects where x-rays may have been concentrated and scattered may be covered by the filling material or solid jacket volume, thus reducing scattering and beam hardening effects. The jacket may provide the "ideal" circular cross-section for scanning in which thickness of material to be penetrated is constant for all the projections. The jacket may be, for example, a cylindrical shape or spherical shape depending on the relative motion of the scanning elements in the scanning apparatus. This 'ideal' shape may further improve the image quality and contrast of the scan. Further, the 3DCT scanning parameters may be optimised, hence improving scanning efficiency.

It will be appreciated that the arrangements disclosed herein may improve the image quality and contrast of a plurality of objects in a configuration scanned by a CT scanning, or other scanning apparatus. The efficiency of the CT scanning method may be improved as the plurality of objects may be scanned at once. Further, the CT scanning parameters may be optimised for the plurality of objects, therefore decreasing scan time and improving scanning efficiency.

It will be understood that the claims are not limited to the arrangements above described and various modifications and improvements can be made without departing from the invention as defined by the independent claims. Except where mutually exclusive, any of the features may be employed separately or in combination with any other features and the disclosure extends to and includes all combinations and sub-combinations of one or more features described herein.

## Claims

1. A method for scanning of turbine blades (16, 16a, 100, 100a) in a scanning apparatus (10), each turbine blade having a leading edge (110, 110a) and a trailing edge (120, 120a) separated by blade surfaces,
the method comprising:
disposing the turbine blades (16, 16a, 100, 100a) on a support (18) of the scanning apparatus, so that the turbine blades are positioned between an imaging beam emitting element (12) and an imaging beam receiving element (24) oppositely disposed to either side of the support, wherein the support is rotatable relative to the emitting and receiving elements about an axis of rotation to allow creation of an image from projections each taken at a different relative angle of rotation, the method being **characterised by** the turbine blades being positioned adjacent each other on the support in a configuration that reduces the variation in material thickness penetrated at the multiple relative angles of rotation;
operating the scanning apparatus at the multiple relative angles of rotation to produce an image of the objects;
the configuration comprising an alternate head to toe arrangement with the leading edge of one blade positioned adjacent to the trailing edge of the adjacent blade.

2. A method according to claim 1, wherein the turbine blades are positioned offset from the axis of rotation, preferably wherein no part or part to be scanned of the turbine blades intersects the axis of rotation.

3. A method according any of the preceding claims, wherein the turbine blades are elongate in cross section and a shape of the configuration formed by the combined shape of the turbine blades in the configuration has a lower aspect ratio than a single one of the turbine blades, preferably wherein the aspect ratio of the configuration is less than two thirds of the aspect ratio of a single one of the turbine blades.

4. A method according to claim 3, wherein the leading edge and the trailing edge of the turbine blades are separated by a concave blade surface opposite to a convex blade surface, and wherein the convex blade surfaces of the turbine blades face each other.

5. A method according to any of the preceding claims, wherein the plurality of turbine blades is disposed on the support so that a notional line drawn from the emitting element to the receiving element through the axis of rotation intersects two or more of the plurality of turbine blades for at least a third and preferably over half of the projections.

6. A method according to any of the preceding claims, wherein a plurality of configurations is positioned in a pattern on the vertices of a notional regular geometric figure centred on the axis of rotation, the objects in each configuration being grouped directly adjacent to each other and centred on each of the vertices, optionally wherein further configurations are positioned in a pattern on inner vertices of a further notional regular geometric figure centred on the axis of rotation (20) and inside the notional regular geometric figure.

7. A method according to claim 6, wherein the configurations are oriented to provide rotational symmetry of the pattern of configurations about the axis of rotation.

8. A method according to claim 6, wherein the configurations are positioned on some but not all of the vertices of the notional regular geometric figure, preferably so that all of the turbine blades are positioned to one side of a plane along which the axis of rotation extends.

9. A method according to any of the preceding claims, wherein the or each configuration of turbine blades is contained within a jacket (180), with the volume surrounding the turbine blades (16, 16a) within the jacket being occupied by a filling material (170) or a solid jacket volume.

10. A method according to claim 9, wherein the filling material or solid jacket volume has an imaging beam attenuation close to the imaging beam attenuation of the material of the turbine blades, preferably wherein the filling material or solid jacket volume has the same imaging beam attenuation as the imaging beam attenuation of the material of the turbine blades.

11. A method according to claim 9 or 10, wherein the filling material is in the form of powder, grains or fluid, preferably wherein the filling material is either metal powder or polymer powder.

12. A method according to claim 11, wherein the powder is in the form of metal powder of the same material as the object.

13. A method according to claim 9 or 10, wherein the solid jacket volume is formed of a metal of the same material as the turbine blades.

14. A method according to any of claims 9 to 13, further comprising a border region surrounding or partially surrounding each turbine blade in the jacket with an imaging beam attenuation different from the imaging beam attenuation of the turbine blade.

15. A method according to claim 14 wherein the border region is formed by inserting the turbine blade into a protective film or wall or sleeve.

16. A method according to any of claims 9 to 15, wherein the jacket has a circular cross-section and preferably comprises one or more walls together forming a spherical or part spherical surface; or a cylindrical side wall extending from a base, preferably wherein the base and side wall are formed of a polymer film or wall containing the filling material (170).

17. A method according to any of the preceding claims, wherein the scanning apparatus (10) is a computational tomography, CT, scanning apparatus, preferably a three-dimensional, 3DCT, scanning apparatus, and wherein the imaging beam is an x-ray.

18. A combination of a scanning apparatus (10) for scanning of a plurality of turbine blades and a plurality of turbine blades (16, 16a, 100, 100a) in the scanning apparatus, each turbine blade having a leading edge (110, 110a) and a trailing edge (120, 120a) separated by blade surfaces, the scanning apparatus comprising:
a support (18) for the turbine blades; and
an imaging beam emitting element (12) and an imaging beam receiving element (24) oppositely disposed to either side of the support, wherein the support is rotatable relative to the emitting and receiving elements about an axis of rotation to allow creation of an image of the turbine blades from projections each taken at a different relative angle of rotation; **characterised in that**
the turbine blades are positioned on the support in a configuration that reduces the variation in material thickness penetrated at the multiple relative angles of rotation; so that when the scanning apparatus is operated at the multiple relative angles of rotation it produces an image of the plurality of turbine blades;
wherein the configuration comprises an alternate head to toe arrangement with the leading edge of one blade positioned adjacent to the trailing edge of the adjacent blade.

## Patentansprüche

1. Verfahren zum Abtasten von Turbinenschaufeln (16, 16a, 100, 100a) in einer Abtastvorrichtung (10), wobei jede Turbinenschaufel eine Vorderkante (110, 110a) und eine Hinterkante (120, 120a) aufweist, die durch Schaufeloberflächen getrennt sind,
wobei das Verfahren Folgendes umfasst:
Anordnen der Turbinenschaufeln (16, 16a, 100, 100a) auf einer Stütze (18) der Abtastvorrichtung, sodass die Turbinenschaufeln zwischen einem abbildungsstrahlenemittierenden Element (12) und einem abbildungsstrahlenempfangenden Element (24) positioniert sind, die gegenüberliegend auf beiden Seiten der Stütze angeordnet sind, wobei die Stütze bezogen auf das emittierende und empfangende Element um eine Drehachse drehbar ist, um eine Erzeugung eines Bildes aus Projektionen zu ermöglichen, die jeweils in einem anderen relativen Drehwinkel aufgenommen sind, wobei das Verfahren **dadurch gekennzeichnet ist, dass** die Turbinenschaufeln benachbart zueinander auf der Stütze in einer Konfiguration positioniert sind, welche die Variation der Materialdicke reduziert, die bei den mehreren relativen Drehwinkeln durchdrungen wird;
Betreiben der Abtastvorrichtung bei den mehreren relativen Drehwinkeln, um ein Bild der Objekte zu produzieren;
wobei die Konfiguration eine abwechselnde Oben-nach-unten-Einrichtung umfasst, bei der die Vorderkante einer Schaufel benachbart zu der Hinterkante der benachbarten Schaufel positioniert ist.

2. Verfahren nach Anspruch 1, wobei die Turbinenschaufeln versetzt zu der Drehachse positioniert sind, wobei vorzugsweise kein Teil oder kein abzutastender Teil der Turbinenschaufeln die Drehachse schneidet.

3. Verfahren nach einem der vorhergehenden Ansprüche, wobei die Turbinenschaufeln im Querschnitt länglich sind und eine Form der Konfiguration, die durch die kombinierte Form der Turbinenschaufeln in der Konfiguration gebildet ist, ein niedrigeres Seitenverhältnis als eine einzelne der Turbinenschaufeln aufweist, wobei das Seitenverhältnis der Konfiguration vorzugsweise weniger als zwei Drittel des Seitenverhältnisses einer einzelnen der Turbinenschaufeln ist.

4. Verfahren nach Anspruch 3, wobei die Vorderkante und die Hinterkante der Turbinenschaufeln durch eine konkave Schaufeloberfläche gegenüber einer konvexen Schaufeloberfläche getrennt sind und wobei die konvexen Schaufeloberflächen der Turbinenschaufeln einander zugewandt sind.

5. Verfahren nach einem der vorhergehenden Ansprüche, wobei die Vielzahl von Turbinenschaufeln auf der Stütze angeordnet ist, sodass eine gedachte Linie, die von dem emittierenden Element durch die Drehachse zu dem empfangenden Element gezogen ist, zwei oder mehr aus der Vielzahl von Turbinenschaufeln für mindestens ein Drittel und vorzugsweise über die Hälfte der Projektionen schneidet.

6. Verfahren nach einem der vorhergehenden Ansprüche, wobei eine Vielzahl von Konfigurationen in einem Muster auf den Scheitelpunkten einer gedachten regelmäßigen geometrischen Figur positioniert ist, die auf der Drehachse zentriert ist, wobei die Objekte in jeder Konfiguration direkt benachbart zueinander gruppiert und auf jedem der Scheitelpunkte zentriert sind, wobei weitere Konfigurationen optional in einem Muster auf inneren Scheitelpunkten einer weiteren gedachten regelmäßigen geometrischen Figur, die auf der Drehachse (20) zentriert ist, und innerhalb der gedachten regelmäßigen geometrischen Figur positioniert sind.

7. Verfahren nach Anspruch 6, wobei die Konfigurationen ausgerichtet sind, um Drehsymmetrie des Musters von Konfigurationen um die Drehachse bereitzustellen.

8. Verfahren nach Anspruch 6, wobei die Konfigurationen auf einigen, jedoch nicht allen der Scheitelpunkte der gedachten regelmäßigen geometrischen Figur positioniert sind, vorzugsweise so, dass alle der Turbinenschaufeln auf einer Seite einer Ebene positioniert sind, entlang der sich die Drehachse erstreckt.

9. Verfahren nach einem der vorhergehenden Ansprüche, wobei die oder jede Konfiguration von Turbinenschaufeln in einem Mantel (180) enthalten ist, wobei das Volumen, das die Turbinenschaufeln (16, 16a) in dem Mantel umgibt, von einem Füllmaterial (170) oder einem festen Mantelvolumen eingenommen wird.

10. Verfahren nach Anspruch 9, wobei das Füllmaterial oder das feste Mantelvolumen eine Abbildungsstrahlabschwächung nahe der Abbildungsstrahlabschwächung des Materials der Turbinenschaufeln aufweist, wobei das Füllmaterial oder das feste Mantelvolumen vorzugsweise die gleiche Abbildungsstrahlabschwächung wie die Abbildungsstrahlabschwächung des Materials der Turbinenschaufeln aufweist.

11. Verfahren nach Anspruch 9 oder 10, wobei das Füllmaterial in Form von Pulver, Körnern oder Fluid vorliegt, wobei es sich bei dem Füllmaterial vorzugsweise entweder um Metallpulver oder Polymerpulver handelt.

12. Verfahren nach Anspruch 11, wobei das Pulver in Form von Metallpulver aus dem gleichen Material wie das Objekt vorliegt.

13. Verfahren nach Anspruch 9 oder 10, wobei das feste Mantelvolumen aus einem Metall aus dem gleichen Material wie die Turbinenschaufeln gebildet ist.

14. Verfahren nach einem der Ansprüche 9 bis 13, ferner umfassend eine Randregion, die jede Turbinenschaufel in dem Mantel mit einer Abbildungsstrahlabschwächung, die sich von der Abbildungsstrahlabschwächung der Turbinenschaufel unterscheidet, umgibt oder teilweise umgibt.

15. Verfahren nach Anspruch 14, wobei die Randregion durch Einführen der Turbinenschaufel in eine Schutzfolie oder -wand oder -hülse gebildet ist.

16. Verfahren nach einem der Ansprüche 9 bis 15, wobei der Mantel einen kreisförmigen Querschnitt aufweist und vorzugsweise Folgendes umfasst, eine oder mehrere Wände, die zusammen eine kugelförmige oder teilkugelförmige Oberfläche bilden; oder eine zylindrische Seitenwand, die sich von einer Basis erstreckt, wobei die Basis und die Seitenwand vorzugsweise aus einer Polymerfolie oder -wand gebildet sind, die das Füllmaterial (170) enthält.

17. Verfahren nach einem der vorhergehenden Ansprüche, wobei die Abtastvorrichtung (10) eine Computertomographie-Abtastvorrichtung, CT-Abtastvorrichtung, ist, vorzugsweise eine dreidimensionale Abtastvorrichtung, 3DCT-Abtastvorrichtung, und wobei der Abbildungsstrahl ein Röntgenstrahl ist.

18. Kombination einer Abtastvorrichtung (10) zum Abtasten einer Vielzahl von Turbinenschaufeln und einer Vielzahl von Turbinenschaufeln (16, 16a, 100, 100a) in der Abtastvorrichtung, wobei jede Turbinenschaufel eine Vorderkante (110, 110a) und eine Hinterkante (120, 120a) aufweist, die durch Schaufeloberflächen getrennt sind, wobei die Abtastvorrichtung Folgendes umfasst:
eine Stütze (18) für die Turbinenschaufeln; und
ein abbildungsstrahlenemittierendes Element (12) und ein abbildungsstrahlenempfangendes Element (24), die gegenüberliegend auf beiden Seiten der Stütze angeordnet sind, wobei die Stütze bezogen auf das emittierende und empfangende Element um eine Drehachse drehbar ist, um eine Erzeugung eines Bildes der Turbinenschaufeln aus Projektionen zu ermöglichen, die jeweils in einem anderen relativen Drehwinkel aufgenommen sind; **dadurch gekennzeichnet, dass**
die Turbinenschaufeln auf der Stütze in einer Konfiguration positioniert sind, welche die Variation der Materialdicke reduziert, die bei den mehreren relativen Drehwinkeln durchdrungen wird;
sodass, wenn die Abtastvorrichtung bei den mehreren relativen Drehwinkeln betrieben wird, sie ein Bild der Vielzahl von Turbinenschaufeln produziert;
wobei die Konfiguration eine abwechselnde Kopf-zu-Zeh-Einrichtung umfasst, bei der die Vorderkante einer Schaufel benachbart zu der Hinterkante der benachbarten Schaufel positioniert ist.

## Revendications

1. Procédé de balayage d'aubes de turbine (16, 16a, 100, 100a) dans un appareil de balayage (10), chaque aube de turbine comportant un bord d'attaque (110, 110a) et un bord de fuite (120, 120a) séparés par des surfaces d'aube,
le procédé comprenant :
la disposition des aubes de turbine (16, 16a, 100, 100a) sur un support (18) de l'appareil de balayage, de sorte que les aubes de turbine soient positionnées entre un élément d'émission de faisceau d'imagerie (12) et un élément de réception de faisceau d'imagerie (24) disposés de manière opposée de chaque côté du support, dans lequel le support peut tourner par rapport aux éléments d'émission et de réception autour d'un axe de rotation pour permettre la création d'une image à partir de projections prises chacune à un angle de rotation relatif différent,
le procédé étant **caractérisé par le fait que** les aubes de turbine soient positionnées adjacentes les unes aux autres sur le support dans une configuration qui réduit la variation d'épaisseur de matériau pénétrée aux multiples angles de rotation relatifs ;
le fonctionnement de l'appareil de balayage aux multiples angles de rotation relatifs pour produire une image des objets ;
la configuration comprenant un agencement alterné en tête-bêche avec le bord d'attaque d'une aube positionné adjacent au bord de fuite de l'aube adjacente.

2. Procédé selon la revendication 1, dans lequel les aubes de turbine sont positionnées de manière décalée par rapport à l'axe de rotation, de préférence dans lequel aucune partie ni partie à balayer des aubes de turbine ne coupe l'axe de rotation.

3. Procédé selon l'une quelconque des revendications précédentes, dans lequel les aubes de turbine sont allongées en section transversale et une forme de la configuration formée par la forme combinée des aubes de turbine dans la configuration comporte un rapport d'aspect inférieur à une seule des aubes de turbine, de préférence dans lequel le rapport d'aspect de la configuration est inférieur aux deux tiers du rapport d'aspect d'une seule des aubes de turbine.

4. Procédé selon la revendication 3, dans lequel le bord d'attaque et le bord de fuite des aubes de turbine sont séparés par une surface d'aube concave opposée à une surface d'aube convexe, et dans lequel les surfaces d'aube convexe des aubes de turbine se font face.

5. Procédé selon l'une quelconque des revendications précédentes, dans lequel la pluralité d'aubes de turbine sont disposées sur le support de sorte qu'une ligne fictive tracée depuis l'élément émetteur jusqu'à l'élément récepteur à travers l'axe de rotation coupe deux ou plus de la pluralité d'aubes de turbine pour au moins un tiers et de préférence plus de la moitié des projections.

6. Procédé selon l'une quelconque des revendications précédentes, dans lequel une pluralité de configurations sont positionnées selon un motif sur les sommets d'une figure géométrique régulière fictive centrée sur l'axe de rotation, les objets dans chaque configuration étant regroupés directement adjacents les uns aux autres et centrés sur chacun des sommets, éventuellement dans lequel d'autres configurations sont positionnées selon un motif sur des sommets intérieurs d'une autre figure géométrique régulière fictive centrée sur l'axe de rotation (20) et à l'intérieur de la figure géométrique régulière fictive.

7. Procédé selon la revendication 6, dans lequel les configurations sont orientées pour fournir une symétrie de rotation du motif de configurations autour de l'axe de rotation.

8. Procédé selon la revendication 6, dans lequel les configurations sont positionnées sur certains mais pas tous les sommets de la figure géométrique régulière fictive, de préférence de sorte que toutes les aubes de turbine soient positionnées d'un côté d'un plan le long duquel s'étend l'axe de rotation.

9. Procédé selon l'une quelconque des revendications précédentes, dans lequel la ou chaque configuration d'aubes de turbine est contenue à l'intérieur d'une chemise (180), le volume entourant les aubes de turbine (16, 16a) à l'intérieur de la chemise étant occupé par un matériau de remplissage (170) ou un volume de chemise solide.

10. Procédé selon la revendication 9, dans lequel le matériau de remplissage ou le volume de chemise solide comporte une atténuation de faisceau d'imagerie proche de l'atténuation de faisceau d'imagerie du matériau des aubes de turbine, de préférence dans lequel le matériau de remplissage ou le volume de chemise solide comporte la même atténuation de faisceau d'imagerie que l'atténuation de faisceau d'imagerie du matériau des aubes de turbine.

11. Procédé selon la revendication 9 ou 10, dans lequel le matériau de remplissage est sous forme de poudre, de grains ou de fluide, de préférence dans lequel le matériau de remplissage est une poudre métallique ou une poudre polymère.

12. Procédé selon la revendication 11, dans lequel la poudre est sous forme de poudre métallique du même matériau que l'objet.

13. Procédé selon la revendication 9 ou 10, dans lequel le volume de chemise solide est formé d'un métal du même matériau que les aubes de turbine.

14. Procédé selon l'une quelconque des revendications 9 à 13, comprenant en outre une région de bordure entourant ou entourant partiellement chaque aube de turbine dans la chemise avec une atténuation de faisceau d'imagerie différente de l'atténuation de faisceau d'imagerie de l'aube de turbine.

15. Procédé selon la revendication 14, dans lequel la région de bordure est formée en insérant l'aube de turbine dans un film ou une paroi ou un manchon de protection.

16. Procédé selon l'une quelconque des revendications 9 à 15, dans lequel la chemise comporte une section transversale circulaire et comprend de préférence une ou plusieurs parois formant ensemble une surface sphérique ou partiellement sphérique ; ou une paroi latérale cylindrique s'étendant à partir d'une base, de préférence dans lequel la base et la paroi latérale sont formées d'un film polymère ou d'une paroi contenant le matériau de remplissage (170).

17. Procédé selon l'une quelconque des revendications précédentes, dans lequel l'appareil de balayage (10) est un appareil de balayage à tomographie calculée par ordinateur, CT, de préférence un appareil de balayage tridimensionnel, 3DCT, et dans lequel le faisceau d'imagerie est un rayon X.

18. Combinaison d'un appareil de balayage (10) pour le balayage d'une pluralité d'aubes de turbine et d'une pluralité d'aubes de turbine (16, 16a, 100, 100a) dans l'appareil de balayage, chaque aube de turbine comportant un bord d'attaque (110, 110a) et un bord de fuite (120, 120a) séparés par des surfaces d'aube, l'appareil de balayage comprenant :
un support (18) pour les aubes de turbine ; et
un élément d'émission de faisceau d'imagerie (12) et un élément de réception de faisceau d'imagerie (24) disposés de manière opposée de chaque côté du support, dans lequel le support peut tourner par rapport aux éléments d'émission et de réception autour d'un axe de rotation pour permettre la création d'une image des aubes de turbine à partir de projections prises chacune à un angle de rotation relatif différent ; **caractérisée en ce que**
les aubes de turbine sont positionnées sur le support dans une configuration qui réduit la variation d'épaisseur de matériau pénétrée aux multiples angles de rotation relatifs ; de sorte que lorsque l'appareil de balayage fonctionne aux multiples angles de rotation relatifs, il produise une image de la pluralité d'aubes de turbine ;
dans laquelle la configuration comprend un agencement alterné en tête-bêche avec le bord d'attaque d'une aube positionné adjacent au bord de fuite de l'aube adjacente.
